(19) 

Europäisches
Patentamt
European
Patent Office
Office européen
des brevets

(11)  **EP 3 385 053 A1**

(12)  **EUROPEAN PATENT APPLICATION**
published in accordance with Art. 153(4) EPC

(43) Date of publication:
**10.10.2018 Bulletin 2018/41**

(21) Application number: **16870677.8**

(22) Date of filing: **29.11.2016**

(51) Int Cl.:
**B29C 45/50** (2006.01)          **B29C 45/60** (2006.01)

(86) International application number:
**PCT/JP2016/085456**

(87) International publication number:
**WO 2017/094740 (08.06.2017 Gazette 2017/23)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **30.11.2015   JP 2015233346
28.11.2016   JP 2016229814**

(71) Applicant: **Toyo Machinery & Metal Co. Ltd.
Akashi-shi, Hyogo 674-0091 (JP)**

(72) Inventors:
• **INOUE, Akira
Hyogo 674-0091 (JP)**
• **SHIMOKUSUZONO, So
Hyogo 674-0091 (JP)**

(74) Representative: **Leinweber & Zimmermann
Rosental 7, II. Aufgang
80331 München (DE)**

(54)  **INJECTION MOLDING MACHINE AND INJECTION MOLDING MACHINE SCREW FOR INJECTING MOLTEN RESIN IN WHICH THERMOPLASTIC RESIN AND REINFORCING FIBERS HAVE BEEN MIXED AND MELTED**

(57)     [Problem] The present invention provides an injection molding machine and screw therefor with which, when mixing reinforcing fibers in a molten resin and injection molding same, the reinforcing fibers can be uniformly dispersed in the molten resin.

[Solution] For a screw 7 provided in an injection molding machine 1, a mixing section 17 is provided on the downstream side of a compression section 18. Three helical flights 17a (x, y, z) are provided in the mixing section 17 and three grooves 17b, 17b', which are helically dis-

posed in the opposite or the same direction as the orientation of said flights 17a, 17a', are formed. As a result of said grooves 17b, 17b', it is possible to keep the fiber lengths of the reinforcing fibers long and even if the reinforcing fibers become tangled in the compression section 18, the fibers are defibrated in the mixing section 17, the shearing of long fibers in the molten resin is mitigated, the reinforcing fibers are dispersed uniformly and a good product is obtained.

Fig.4

**Description**

FIELD OF THE INVENTION

The present invention relates to an injection molding machine that injects molten resin, in which a thermoplastic resin and reinforcing fibers are mixed and melted, into a cavity of clamped mold, and a screw used in the injection molding machine, and in particular, an injection molding machine capable of using longer reinforcing fibers and a screw used in the injection molding machine.

BACKGROUND OF THE INVENTION

In recent years, to increase the strength of a resin molded product, natural fibers such as bamboo and pulp or artificial fibers such as glass fibers and carbon fibers, which are called filler, have been mixed in a resin, and the mixture has been injection-molded. Specifically, fibers are charged into an injection molding machine, and a molten resin and the fibers are mixed and injection-molded. However, in the case of using longer reinforcing fibers, long-fiber-reinforced thermoplastic resin pellets containing long fibers, as resin pellets, may be melted and injection-molded.

To provide a molding with prescribed strength by suppressing fracture of reinforcing fibers contained in a fiber-reinforced thermoplastic resin injected and filled in a cavity of a mold and improving dispersibility, the Inventors of this application disclose an injection molding machine for injecting a fiber-reinforced thermoplastic resin made of a thermoplastic resin and reinforcing fibers into a cavity of a clamped mold from an injection nozzle. The injection molding machine includes a heating cylinder, and a screw rotatably provided in the heating cylinder. The screw includes a compression section for melting and mixing the fiber-reinforced thermoplastic resin supplied from a supply port while conveying the fiber-reinforced thermoplastic resin toward the injection nozzle, and a metering section for metering the melted and mixed fiber-reinforced thermoplastic resin conveyed from the compression section. A Dulmage section is formed for dispersing the reinforcing fibers between the metering section and the compression section (Patent Literature 1).

It is described that the injection molding machine disclosed in Patent Literature 1 achieves following effects.

(1) Since the Dulmage section is formed between the metering section and the compression section of the screw, immediately before injection and filling into the cavity of the mold via the injection nozzle, the defibrating effect of the reinforcing fibers in the fiber-reinforced thermoplastic resin melted and mixed in the heating cylinder can be enhanced, thereby improving the fiver dispersibility. Thus, the dispersibility of the reinforcing fibers can be improved to acquire the molding with predetermined strength.

(2) Further, by forming the Dulmage section between the metering section and the compression section in the screw, reinforcing natural fibers can be effectively dispersed. Even weak reinforcing natural fibers (natural fibers such as bamboo, jute, and linen) that are easily broken or fractured can be prevented from becoming smaller than a predetermined size. Therefore, it is possible to prevent the remaining fiber length of the reinforcing natural fibers from becoming small as well as to achieve high kneading and dispersing properties of the reinforcing natural fibers in the thermoplastic resin, to acquire the molding with predetermined strength.

(3) Since the Dulmage section of the screw is not formed in the compression section distant from the injection nozzle, but between the metering section and the compression section near the injection nozzle, even when the reinforcing fibers become tangled in the compressing section with rotation of the screw, the reinforcing fibers that become tangled in the Dulmage section can be defibrated and dispersed, and then, the fiber-reinforced thermoplastic resin containing the dispersed reinforcing fibers can be injected and filled into the cavity of the mold via the injection nozzle, to obtain the molding with predetermined strength more reliably.

At present, a glass fiber-reinforced thermoplastic resin (GFRTP) and a carbon fiber-reinforced thermoplastic resin (CFRTP) are often used in vehicle pars and airplane parts. The strength of the reinforced thermoplastic resins greatly depends on the length of fibers in the molded product and thus, it is preferred that fibers are kept long as much as possible.

Accordingly, the long-fiber-reinforced thermoplastic resin has been adopted. However, when glass fibers or carbon fibers are mixed in the thermoplastic resin and they are injection molded, due to the shearing with the screw in the mixing and plasticizing process, fibers are easily broken and become shortened to a few percent of the original length. In addition, when the length of fibers mixed in the resin increases, the fibers mixed in the molten resin may become tangled in the compression section of the injection molding machine, and hardly dispersed.

PRIOR ART DOCUMENTS

PATENT DOCUMENTS

Patent Literature 1: JP 2012-131042 A

SUMMARY OF THE INVENTION

PROBLEM TO BE SOLVED BY INVENTION

An objective of the present invention is to improve an injection molding machine that injects molten resin in which a thermoplastic resin and reinforcing fibers are mixed and melted, and a screw used in the injection molding machine. Specifically, an objective of the present invention is to improve an injection molding machine that can, when mixing reinforcing fibers as fillers in the molten resin, and melting and injecting them, perform uniform stirring and mixing without shearing the reinforcing fibers in the molten resin, and a screw used in the injection molding machine. More specifically, an objective of the present invention is to provide an injection molding machine that, even when the length of the reinforcing fibers mixed with the resin is long, hardly divides the long fibers and can uniformly disperse the long fibers in the resin, and a screw used in the injection molding machine. That is, an objective of the present invention is to uniform long fibers in the molten resin and to achieve the effect of the injection molding machine.

MEANS FOR SOLVING THE PROBLEM

To accomplish the objective, an injection molding machine of the present invention includes a screw rotatably provided in a heating cylinder, the injection molding machine being configured to inject a molten resin, in which a thermoplastic resin and reinforcing fibers are mixed and melted, into a cavity of a clamped mold from an injection nozzle attached to a tip of the heating cylinder.

The screw includes a compression section configured to melt, mix and compress a material while conveying the material forward, and a mixing section configured to stir, mix, and disperse a molten material conveyed from the compressing section, the molten material consisting of the thermoplastic resin and the reinforcing fibers,

the compression section and the mixing section located downstream of the compression section each are configured of a helical flight,

the helical flight of the compression section is formed of one continuous helical screw flight having a gradually-decreasing pitch along a material conveyance direction, and

the helical flight of the mixing section includes a plurality of grooves formed in a surface of the helical flight, the helical flight being not a continuous helical flight.

In the injection molding machine of the present invention, the plurality of grooves formed in a surface of the flight of the mixing section are helically disposed closing a helical direction of the flight with a crossing angle $\alpha$, and serve to stir, mixed, and disperse a material in the mixing section,

wherein, $30° \leq \alpha \leq 150°$.

An injection molding machine screw of the present invention is a screw rotatably provided in a heating cylinder of an injection molding machine, the screw includes a compression section configured to melt, mix, and compress a molten material consisting of a thermoplastic resin and reinforcing fibers while conveying the material forward from a rear end, and a mixing section configured to stir, mix, and disperse the molten material consisting of the thermoplastic resin and the reinforcing fibers,

the compression section and the mixing section located downstream of the compression section each are configured of a helical flight,

the helical flight of the compression section is formed of one continuous helical screw flight having a gradually-decreasing pitch along a material conveyance direction, and

the helical flight of the mixing section includes a plurality of grooves formed in a surface of the helical flight, the helical flight being not a continuous helical flight.

In the injection molding machine screw of the present invention, preferably, the plurality of grooves formed in the flight of the mixing section are helically disposed crossing a helical direction of the flight of the mixing section with an angle of 30 to 150 degrees. By setting the angle of the grooves to the above-mentioned range, even long fibers can be easily defibrated.

In the injection molding machine screw of the present invention, a ratio of a helical pitch Pa in which the plurality of grooves are disposed and a pitch Pb of the flight in the mixing section is set to $1Pb \leq Pa \leq 3Pb$, in a case that the helical pitch Pb of the flight is 1.

In the injection molding machine screw of the present invention, a ratio of a helical pitch Pb in which the plurality of grooves are disposed and a screw diameter D is set to 1D ≤ Pb ≤ 2D, in a case that the screw diameter D is 1.

EFFECTS OF THE INVENTION

The present invention provides an injection molding machine with which a long fiber is not cut into short fibers and long fibers can be evenly dispersed within resin, even if fibers, for reinforcement, to be mixed with the resin has a long length. The present invention also provides a screw included or used in the injection molding machine

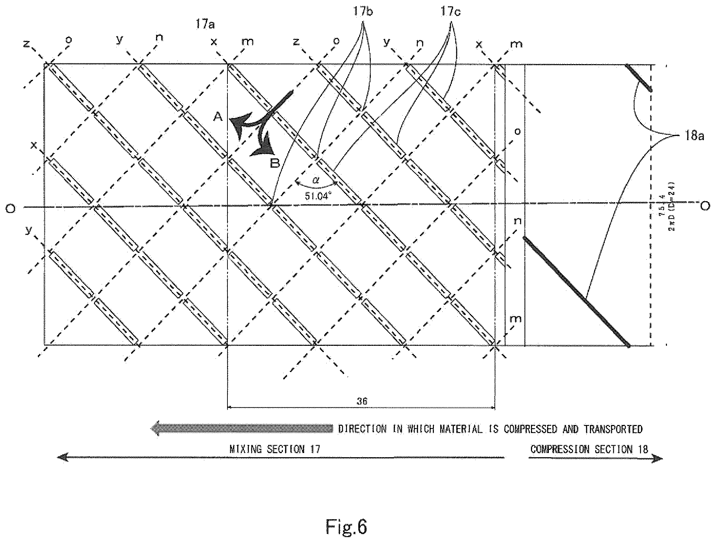

In the present invention, a flight of a mixing section is provided with a plurality of grooves in a direction intersecting a spiral direction of the flight so as to make the flight not to have a spiral shape. Thus, resin fed in an injection molding machine and melted therein flows in a feeding direction along the flight (illustrated by arrow A in FIG. 6) and in a reversed direction along the grooves intersecting the feeding direction (illustrated by arrow B in FIG. 6). This allows sufficient dispersion of the resin flow within the mixing section and sufficient mixture thereof.

In addition, in case resin material is composed of resin pellets in which fiber material is mixed, entangled fiber material in a compressing section is freed from the entanglement. Thus, the injection molding machine according to the present invention is able to evenly disperse fiber material within resin even for material in which long fiber material is mixed.

BRIEF DESCRIPTION OF THE DRAWINGS

FIG. 1 is a schematic structural view illustrating an injection molding machine according to an embodiment of the present invention.

FIG. 2 illustrates a molding process with the injection molding machine according to the embodiment of the present invention.

FIG. 3 is an explanatory view illustrating a screw used in the injection molding machine according to the embodiment of the present invention.

FIG. 4 is an explanatory view illustrating a mixing section of the screw of FIG. 3.

FIG. 5 is an explanatory view illustrating the mixing section of the screw according to an embodiment different from that in FIG. 3.

FIG. 6 is a developed view of the screw in a circumference direction thereof illustrating a relation between arrangements of a spiral flight of a compression section and a flight of a kneading section of the screw in FIG. 3.

FIG. 7 is an explanatory view illustrating a relation of an intersection of arrangements between a spiral shape of the flight and a spiral shape of grooves in the kneading section of FIG. 6.

FIG. 8 is a histogram illustrating a distribution of the lengths of fibers of a first molded product and a second molded product.

DESCRIPTION OF THE EMBODIMENTS

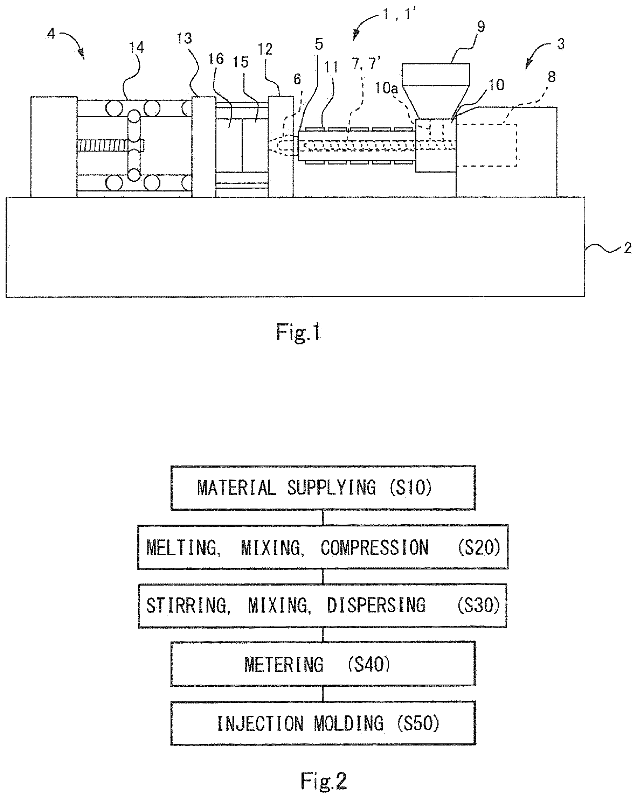

An injection molding machine and a screw included in the machine according to an embodiment of the present invention will be described below with reference to FIGS. 1 to 7. The injection molding machine 1 illustrated in FIG. 1 exhibits a state in which melted resin within a cavity, being closed, of a mold is injected. The injection molding machine 1 includes a machine platform 2, an injection unit 3 mounted on the platform, and a die closing unit 4.

Terms "forward" and "rearward" used in this specification refer, respectively, to a left side direction and a right side direction in FIG. 1.

The present invention has a structure that is not differ from an invention previously filed, and provides clear description with detailed discussion of function and effects based on the structure.

The injection unit 3 includes a tubular heating cylinder 5, an injection nozzle 6 provided to a tip of the heating cylinder 5, a screw 7 provided within the heating cylinder 5, a rotary driving means 8 that rotates the screw 7, a hopper 9 in which material is fed, and a hopper block 10 that feeds the material, fed from the hopper 9, to the screw 7. Generally, material fed from the hopper 9 is called a long fiber reinforcing thermoplastic resin.

A heater 11 for heating the heating cylinder 5 is provided around the heating cylinder 5. A feeding port 10a for feeding material within the hopper 9 to the heating cylinder 5 and the screw 7 is provided inside the hopper block 10.

The mold clamping unit 4 includes a fixed die plate 12, a movable die plate 13, and a toggle link mechanism 14. A fixed mold 15 is attached to the fixed die plate 12, and a movable mold 16 is attached to the movable die plate 13. The toggle link mechanism 14 is driven by a motor, not illustrated, and moves the movable die plate 13 in a left direction in FIG. 1 to open the mold and moves the movable die plate 13 in a right direction in FIG. 1 to close the mold.

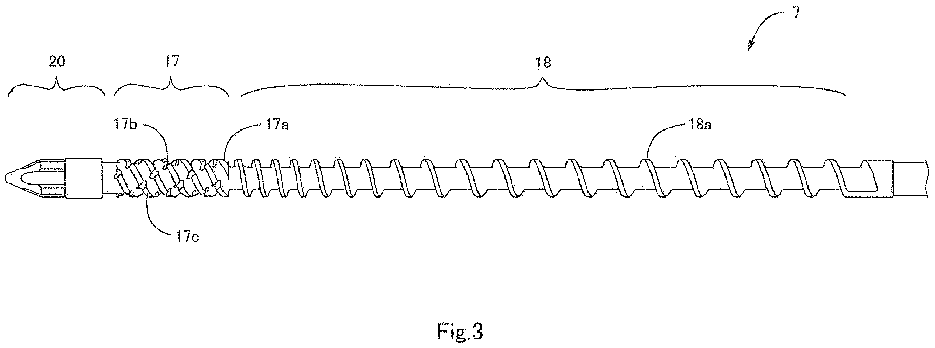

Next, the structure of a screw 7 employed in the injection molding machine of the embodiment will be described with reference to FIGS. 3 to 7. The screw 7 has a front part at a left side in FIG. 3 and a rear part at a right side in FIG.

3. The screw 7 includes a compression section 18 that melts, mixes and compresses material, a mixing section 17 that is provided forward of the compression section 18 and stirs, mixes and disperses the material, and a check ring section 20, which members are sequentially provided forwardly from a side the material is fed, in FIG. 3.

The compression section 18 provided rear of the screw 7 includes a sequentially spiraled screw flight 18a, in the form of a single thread, on the surface thereof. This flight 18a has a pitch wider at a side rear of the material feeding side. The pitch of the flight 18a gradually narrows toward a frontward direction. The sequentially spiraled screw flight 18a, in the form of a single thread, provides a mixing function and a compression function of melted material. The terms "spiral" and "single thread" indicates a singly spiraled form.

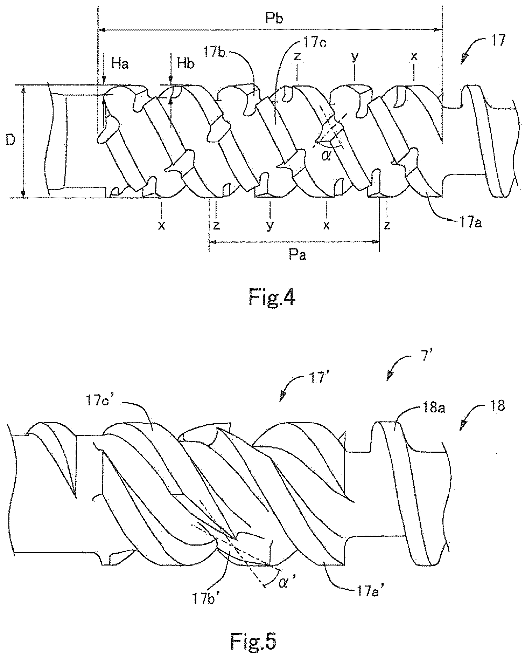

As illustrated in FIGS. 4 and 6, the mixing section 17 following the compression section 18 according to this embodiment includes three threaded spirals (x, y, z in FIG. 6). Specifically, the mixing section 17 includes three flights 17a of spiral configuration that is directed to a direction same as that of the screw flight 18a of the compression section 18.

The mixing section 17 according to the embodiment includes a configuration of three spiraled flights 17a (x, y, z). Each of the three flights is spirally disposed and is cut and/or divided by groove portions 17b so as to be discontinued, providing a plurality of individual flight elements 17c spirally formed in each flight. The groove portions 17b are multiply provided to each of the three spiral flights 17a (x, y, z) and are arranged to provide a three spiral configuration (m, n, o). The direction of the arrangement runs reversely and intersects with respect to the spiral of the compressing section 18 by the degree of $\alpha$ (FIG. 6).

FIG. 6 provides a developed view illustrating, in the circumference direction of the screw 7, a relationship among the single spiral flight 18a provided to the compression section 18, the three spiral flights 17a (x, y, z) provided to the mixing section 17 following the compression section, and the three spiral positions (m, n, o) of the groove portions formed on each of the three spiral flights 17a. Thus, a formed spiral flight configuration is typically and collectively referred as a Dulmage type.

The groove portions 17a are recessed inwardly from the surfaces of the flights 17a and are arranged in three spiral configurations (m, n, o) that intersect with the spirals of the flights 17a with an intersecting angle $\alpha$ in the range of 30° to 150°. The intersecting angle in this embodiment is preferably 51.04°. The term "recessed" does not mean to limit a processing method and includes any configuration in which a continuous spiral flight 17a is cut and/or divided by the groove portions 17b, providing a plurality of individual flight elements 17c.

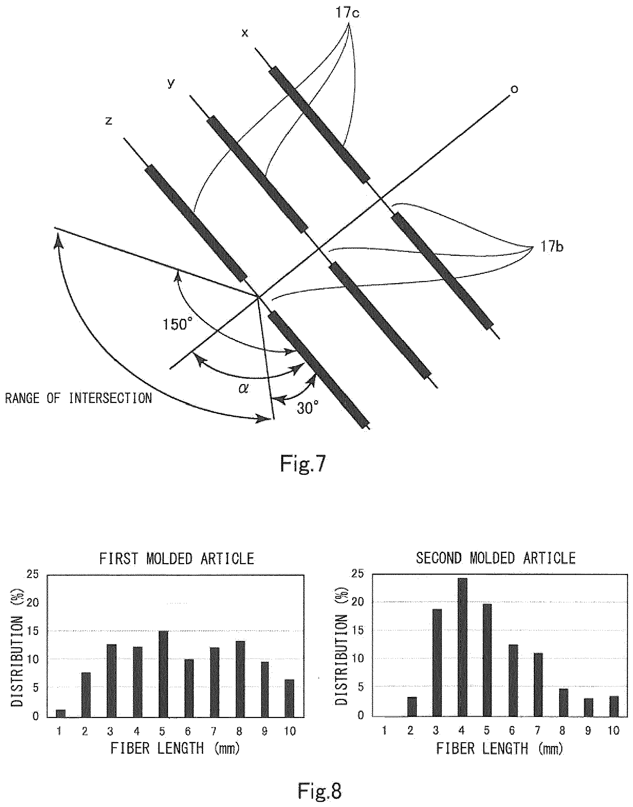

As illustrated in FIG. 7, the allowed intersecting angle $\alpha$ between the spiral flights 17a and the plurality of flight elements 17c is in the range of $30° \leq \alpha \leq 150°$, which indicates following two conditions:

(1) the spiral arrangement of $30° \leq \alpha \leq$ the plurality of flight elements 17c forms a vertical condition on a screw shaft; and
(2) the spiral arrangement of the plurality of flight elements 17c forms on the screw shaft the vertical condition $\leq \alpha \leq 150°$.

The intersection in the condition in above (1) is a case wherein the directions of spiral of the plurality of flight elements 17c arranged spirally with respect to the spiral flights 17a run in the same direction. The intersection in the condition in above (2) is a case wherein the directions of spiral of the plurality of flight elements 17c arranged spirally with respect to the spiral flights 17a run in the reversed direction.

As described above, it is preferable for the screw of the injection molding machine that the spiral arrangement of the groove portions of the mixing section run reversely (above (2)) with respect to and intersects the spiral direction of the flights of the mixing section. In addition, it is possible to arrange that the spiral arrangement of the groove portions of the mixing section be the same direction as (above (1)) and intersecting the spiral direction of the flights of the mixing flights. In the invention having such arrangement, melted material flow diverges into a feeding direction A, along a feeding direction, and a reversed direction B, when the melted resin is fed through the groove portions 17b, thereby dispersing long fibers and providing an enhanced mixing effect.

The spiral arrangement of the groove portions 17b of the mixing section may be provided with a pitch Pb that is the same as or different from the spiral pitch Pa of a single flight 17a of the mixing section. Specifically, the ratio of the pitch Pb between the spiral arrangement of the groove portions 17b of the mixing section and the pitch Pa of the flight 17a of the mixing section is preferably such that Pb is 1 to 3 when the pitch Pa of the flight is 1. That is $1Pa \leq Pb \leq 3Pa$.

Be noted that the embodiment illustrated in the developed view of FIG. 6, Pa = Pb = 36 mm.

In a preferable example, the pitch Pb of the spiral arrangement of the groove portions 17b may be two (Pb = 2) when the spiral pitch Pa of the flight 17a is one (Pa = 1). As illustrated in FIG. 4, the groove portions 17b each have a depth Hb that is substantially the same as the height Ha of the flight 17a. In addition, the spiral pitch Pa of the flight 17a is preferably $1D \leq Pa \leq 2D$, wherein the diameter D of the screw is one (1).

Be noted that in the embodiment illustrated in the developed view of FIG. 6, Pa = 1.5D = 36 mm.

When the function or effect of the flights of the mixing section 17 of the invention is described, the function of each flight element is described as an effect of the flight elements, while the function of the entire flights of the mixing section 17 is described as an effect of the flight 17a.

An operation of an injection molding machine according to an embodiment will be described with reference to FIG. 1.

In an injection unit 3, a heater 11 heats a heating cylinder 5. In a mold clamping unit 4, a movable die plate 13 is moved by a toggle link mechanism 14 to a right side in FIG. 1, and a movable mold 16 and a fixed mold 15 are closed. The movable mold 16 and the fixed mold 15 together define inside thereof a cavity, not illustrated.

Material (long fiber reinforcing thermoplastic resin pellets) is fed into the injection molding machine having the structure of above. The material to be fed is thermoplastic resin pellets in which reinforcing fibers are contained in advance.

The thermoplastic resin may be selectively chosen in accordance with a purpose of use of product, the resin including polyamide resin, polypropylene resin, polystyrene resin, polycarbonate resin, acrylonitrile-butadiene-styrene copolymer resin, polyethylene terephthalate resin, and a polybutylene terephthalate resin

The reinforcing fiber may be selectively chosen from such as natural fibers including bamboo or pulp, glass fiber, carbon fiber, metal fiber, and carbon nanofiber. The length of fiber may be selectively chosen depending on the purpose of use of product. The length of fiber is 3 mm or greater and preferably from about 5 mm to 10 mm.

Referring to FIG. 2, an injection process using an injection molding machine according to an embodiment of this invention is hereinafter described. An attempt to evenly mixed thermoplastic resin and reinforced fiber becomes more difficult to achieve when longer reinforced fiber is used. Though it may be an option to feed the resin and the fiber separately from the hopper 9 or feed them after being adequately mixed, a conventional means employed in view of such difficulty is to use a thermoplastic resin pellet in which reinforced fiber is contained in advance.

In S10, the material, which is the pellet, thrown into the hopper 9 is introduced into a heating cylinder 5 through a feed port 10a. In the heating cylinder 5 in which a screw 7 is being rotated by a rotary driving means 8, the material fed from the hopper 9 by the rotation of the screw 7 is transferred from the vicinity of the feed port 10a to a forward position in the heating cylinder 5.

In the heating cylinder 5, the material is carried forward by a screw flight 18a provided in a compression section of the screw 7, and the thermoplastic resin is melted by degrees under heat from a heater 11 and mixed with the reinforced fiber. After the material is adequately melted and mixed with the reinforced fiber, the material is then compressed by the compression section 18 of the screw 7 where the screw flight 18a has a narrow pitch (S20). The compressed material is then transferred forward until it arrives at a mixing section 17.

Details of the mixing section 17 are described referring to FIG. 6. FIG. 6 is a circumferentially exploded view of the screw of FIG. 3, illustrating a positional relationship between the helical flight of the compression section and the flight of the mixing section. This drawing provides more detailed illustration of the flight 17a of the mixing section 17. The exploded view of FIG. 6 rounded by 360 degrees around the O-O axis indicates the flight positions on the circumference of the screw 7.

In the mixing section 17, the molten material that has been mixed by the compression section 18 is stirred and further mixed by a helical flight 17a with three threads (x, y, z) so as to disperse the fiber. In the flight 17a of the mixing section 17, its helical shape is not continuous but is interrupted by three grooves that are helically arranged (m, n, o) in a direction opposite to a direction in which the flight 17a is helically extending. The flight 17a is accordingly made up of a plurality of independent flight elements 17c. This structural feature of the flight 17a promises successful stirring, mixing, and fiber dispersion in the mixing section 17 (S30). While this specification describes, as an embodiment, three helical grooves (m, n, o), the number of grooves is not limited to three and may be one helical groove or any optional number of helical grooves.

By using the flight 17a of the mixing section 17 thus arranged, the molten resin carried in the direction of material compression and transfer by, for example, the flight elements 17c of the helical thread z, is then transferred by the groove 17b to the previous helical thread x, where the molten resin is bifurcated into two directions indicated by arrows A and B. Thus, flow of the molten material is generated by the flight elements 17c in a direction opposite to the direction of material transfer. Then, a backflow B of the molten material in part serves to effectively stir the molten material, allowing the reinforced fiber to be more evenly dispersed in the molten material. By thus generating the backflow of the molten material in part in the direction indicated by arrow B, the material is not continuously compressed. This alleviates a shear force acting upon the resin and a force that causes breakage of long fiber. Thus, the stirring, kneading, and fiber dispersion (S30) are successfully achieved.

When a material is used in which the thermoplastic resin contains reinforced fiber, in the heating cylinder 5, the resin is melted by the compression section 18 of the screw 7 and mixed with the reinforced fiber. Because the flight 18a of the screw 7 has a gradually narrower pitch, the material is mixed and compressed at the same time, and a shear force may act upon the reinforced fiber. Then, the reinforced fiber may be entangled in the compression section depending on its fiber length, which may involve the risk of long fiber being cut in short lengths. In this embodiment providing the mixing section 17 described above on the front side of the compression section 18 of the screw 7, the backflow of the molten material in part in the mixing section 17 serves to alleviate the shear force, allowing the entangled long reinforced fiber to be fibrillated and evenly dispersed in the molten resin.

The "fibrillation" in this description means that entanglement of the long fiber is undone by the stirring action.

The molten material in which the reinforced fiber has been dispersed by the mixing section 17 is transferred from the mixing section 17 to and metered in a check-ring section 20 (S40), and then injected through an injection nozzle 6 into closed mold 15 and 16 (S50). In the mold 15 and 16, the ejected molten material containing the evenly dispersed reinforced fiber is molded into an article uniform in strength.

An injection molding machine 1' and a screw 7' used in this machine according to a second embodiment are hereinafter described referring to FIGS. 1 to 5. The injection molding machine 1' is similar to the injection molding machine 1 according to the first embodiment except features of a screw provided in the heating cylinder 5. The structural elements in the second embodiment similar to those described in the first embodiment are illustrated with the same references signs, and detailed description of such like components is omitted. A molding workflow using the injection molding machine 1', which is similar to the flow illustrated in FIG. 2, will not be described.

As illustrated in FIG. 5, the screw 7' has a compression section 18 along the direction of material transfer and a mixing section 17' ahead of the compression section 18. The screw 7' further has a check-ring section 20 in the vicinity of an end part further ahead so as to prevent backflow of the metered material at the time of injection.

As illustrated in FIG. 5, the screw 7' has a single-thread helical flight 18a formed in the compression section 18, and further has, in the mixing section 17, a flight 17a' with three threads similarly to the first embodiment. The single thread screw flight 18a of the compression section 18 and the flight 17a' of the mixing section 17 have the same helical direction.

In the mixing section 17 of this embodiment, the three-thread flight 17a' has a groove 17b' formed in the same direction as the helical direction, as illustrated in the drawing. The groove 17b' is a three-thread helical notch dented inward from the surface of the flight 17a'. The mixing section 17 is not a continuous flight but is made up of a plurality of independent flight elements 17c' helically arranged.

In the second embodiment, an angle a' made by the helically arranged flight elements 17c' and the helical flight 17a' intersecting with each other is 30 degrees (150 degrees when expressed with the value of angle a), and the pitch Pb' of the groove 17b' is expressed by Pb' = 3 × Pa', where the pitch Pa' of the flight 17a' is 1.

The depth of the groove 17b' is substantially equal to the height of the flight 17a'. The pitch Pa' of the flight 17a' is expressed by Pa' = 1.5 × D, where the screw diameter D is 1.

Next, molded articles are described that are obtained by the injection molding machine 1 provided with the screw 7 according to the first embodiment and the injection molding machine 1' provided with the screw 7' according to the second embodiment. In the description below, the molded article obtained by the injection molding machine 1 of the first embodiment is a first molded article, and the molded article obtained by the injection molding machine 1' of the second embodiment is a second molded article.

The same material was used for the first and second molded articles, which was a glass fiber reinforced thermoplastic resin pellet (GFRTP) (Funcster LR22W, supplied by Japan Polypropylene Corporation). The pellet contained 20 mass% of glass fiber, and fiber length and fiber diameter in the pellet were respectively 10 mm and 16 $\mu$m. The molding machine used was an injection molding machine supplied by TOYO MACHINERY & METAL CO., LTD. (PLASTER ET-40V). By using this molding machine, dumb-bell type test specimen compliant with "JIS K 7161" was formed by injection molding. Table 1 illustrates conditions employed in the molding condition.

Table 1

| Conditions | Unit | Value |
|---|---|---|
| Screw revolution speed | rpm | 100 |
| Back pressure | MPa | 2.7 |
| Holding pressure | MPa | 25 |
| Temperature of heating cylinder | °C | 200 |
| Tool temperature | °C | 70 |
| Injection speed | mm/sec. | 50 |
| Retention time | sec. | 12 |
| Cooling time | sec. | 12 |

The obtained first and second molded articles were subjected to measurements of the following test items; length of remaining fiber (mm), fiber dispersibility, tensile strength (MPa), and tensile strength variability.

Table 2

| Test items | | Unit | First molded article | Second molded article |
|---|---|---|---|---|
| Length of remaining fiber | | mm | 6.37 | 5.34 |
| Fiber dispersibility | | -- | 0.785 | 0.711 |
| Tensile strength | | MPa | 90.70 | 87.90 |
| Tensile strength variability | Max. | MPa | 94.11 | 92.30 |
| | Min. | MPa | 85.00 | 78.91 |

As illustrated in Table 2, the length of remaining fiber was 6.37 mm in the first molded article and was 5.34 mm in the second molded article, which were measured as described below. The test pieces were each burnt at 550°C in an electric furnace so as to vaporize resin alone and remove glass fiber. The removed fiber was dispersed in water in a schale and photographed by a stereoscopic microscope. The obtained photograph was scanned into a computer and subjected to an image processing software to measure the fiber length. For each screw, 1,000 strings of fiber were measured. A weight average fiber length Lw in the following formula was used to evaluate the fiber length. In this formula, L represents the fiber length in each test piece.

[Numerical formula 1]

$$L_W = \frac{\sum L^2}{\sum L}$$

It is said that a residual fiber length of this kind of glass fiber is normally at most about 3 mm, and therefore, good results were obtained in both of the first molded article and the second molded article. In addition, when comparing the first molded article and the second molded article, about 19.2% improvement was observed in the first molded article as compared with the second molded article.

Here, fiber length distributions of the first molded article and the second molded article are illustrated in the histograms of FIG. 8. In these histograms, the first molded article has a larger ratio of fibers of a long fiber length. Although the second molded article has a peak in the portion of 3 to 5 mm, the peak is shifted to the side of longer fiber length as compared with a molded article produced by using a conventional screw.

As is understood from this result, the residual fiber lengths are long in the first molded article and the second molded article as compared with those of an article molded by a conventional injection molding machine. There are several factors of breakage of fibers in an injection molding, and among them, shearing stress is said to significantly cause of a breakage. This shearing stress is greatly affected by a speed difference between a screw surface and a resin, between an inner surface of a heating cylinder and a resin, or the like. It is presumed that breakage of fibers was controlled in the screws 7 and 7' of the first and second embodiments, because the mixing section was provided with the grooves 17b, 17b', and as a result, flow paths of the melted resin were expanded to decrease flow velocity, and accordingly, a fiber become hardly affected by a shear.

In addition, as illustrated in Table 2, a fiber dispersibility of the first molded article was 0.785, and that of the second molded article was 0.711. "Fractal dimension" was used for evaluation of fiber dispersibility. First, the test piece was cut at the center portion, and the cross-sectional surface was polished after subjected to a resin filling by use of epoxy resin. The polished surface was photographed with a microscope, and binarized by coloring only fibers in the image. The vertical and horizontal sides of the dispersion image to be a target are divided into n pieces to obtain $n^2$ pieces of elements. Area ratio of the fibers in each of the elements were calculated, an average value a and a standard deviation $\sigma a$ thereof were calculated, and a coefficient of variation $C_v(n)$ was obtained from the following equation.

[Numerical formula 2]

$$C_v\left(n\right) = \frac{a}{\sigma_a}$$

Specifically, Cv(n) is obtained with varying n variously, and both logarithmic plots are plotted with 1/n on the x axis and Cv(n) on the y axis (not illustrated). When a straight line relationship is established between the two, a fractal dimension D is obtained by multiplying the slope of the straight line by -1. The larger the fractal dimension D, the better the dispersibility. In this experiment, a fractal value was calculated from eight photographs by setting n = 27 to 34 in increments of 1.

It is said that a fiber dispersibility of a molded article including this kind of glass fiber is normally about 0.6, and therefore, good results were obtained in both of the first molded article and the second molded article. In addition, when comparing the first molded article and the second molded article, about 10.4% improvement was observed in the first molded article as compared with the second molded article.

In addition, as illustrated in Table 2, a tensile strength of the first molded article was 90.73 MPa and that of the second molded article was 87.90 MPa. The tensile strength was measured on the basis of "JIS K 7164". It is said that a tensile strength of a molded article including this kind of glass fiber is normally about 85, and therefore, good results were obtained in both of the first molded article and the second molded article. In addition, when comparing the first molded article and the second molded article, about 3.2% improvement was observed in the first molded article as compared with the second molded article.

Next, reviewing variation in tensile strength (standard deviation), the maximum and the minimum of the first molded article are respectively 94.11 MPa and 85.00 MPa, and the standard deviation was 3.12. In the second molded article, the maximum is 92.30 MPa, a minimum is 78.91 MPa, and the standard deviation was 3.98. It is said that a variation in tensile strength of a molded article including this kind of glass fiber normally exceeds 4, and therefore, good results were obtained in both of the first molded article and the second molded article. In addition, when comparing the first molded article and the second molded article, about 25.5% improvement was observed in the first molded article as compared with the second molded article.

In the above-described embodiment, the grooves 17b provided to the mixing section 17 were formed in three threads of spirals. However, number of thread of spiral to which the grooves are provided is not limited thereto, but may be changed suitably according to material or length of a reinforcing fiber. Further, the angle α between a groove 17b and a flight 17a may be set to 30° to 150°, preferably 50° to 85°.

Further, as for the pitch Pb of the groove 17b, a ratio of the flight 17a to the pitch Pa is not limited to the illustrated state, but may be a ratio of about 1:1 to 3:1. In addition, shape of the grooves 17b may be a randomly arranged array of grooves, instead of spirals.

The present invention is capable of configuring an injection molding machine which injects a melted resin comprising a thermoplastic resin and a reinforcing fiber into a cavity of a clamped mold, from an injection nozzle attached to a tip of a heating cylinder, which is provided with the heating cylinder and a screw rotatably provided to inside of the heating cylinder, wherein the screw is provided with: a compression section in which a material is melted and mixed with being transported forward; a metering section in which the material transported from the compression section is weighed; and a Dulmage type mixing section having a spiral flight between the compression section and the metering section. In the mixing section, grooves are formed on the surface of the flight, which are recessed toward the inside, and the grooves are provided in a direction intersecting the spiral direction of the flight.

The present invention is also capable of configuring a screw for an injection molding machine which is rotatably provided to the inside of the heating cylinder of the injection molding machine. The screw is provided with a compression section in which a material is melted and mixed with being transported forward, a metering section in which the material transported from the compression section is weighed, and a Dulmage type mixing section having a spiral flight between the compression section and the metering section. In the mixing section, grooves are formed on the surface of the flight, which are recessed toward the inside, and the grooves are provided in a direction intersecting the spiral direction of the flight.

That is, in the present invention, it is not indispensable in the injection molding machine and the screw used therein to be provided with a mixing section having a spiral flight between the compression section and the metering section, but an essential technical feature of the invention is to provide a mixing section in the downstream side of the compression section. That is, it is not indispensable to provide a metering section.

REFERENCE SIGNS LIST

1, 1': Injection molding machine
5: Heating cylinder
7, 7': Screw
17: Mixing section
17a, 17a': Flight (Mixing section)
17b, 17b': Groove
18: Compression section
18a: Flight (Compression section)
20: Check ling section

**Claims**

1. An injection molding machine comprising:

a screw rotatably provided in a heating cylinder, the injection molding machine being configured to inject a molten resin, in which a thermoplastic resin and reinforcing fibers are mixed and melted, into a cavity of a clamped mold from an injection nozzle attached to a tip of the heating cylinder, wherein the screw includes

a compression section configured to melt, mix and compress a material while conveying the material forward, and
a mixing section configured to stir, mix, and disperse a molten material conveyed from the compression section, the molten material consisting of the thermoplastic resin and the reinforcing fibers,

the compression section and the mixing section located downstream of the compression section each are configured of a helical flight,
the helical flight of the compression section is formed of one continuous helical screw flight having a gradually-decreasing pitch along a material conveyance direction, and
the helical flight of the mixing section includes a plurality of grooves formed in a surface of the helical flight, the helical flight being not a continuous helical flight.

2. The injection molding machine according to claim 1, wherein the plurality of grooves formed in a surface of the flight of the mixing section are helically disposed closing a helical direction of the flight with a crossing angle a, and serve to stir, mixed, and disperse a material in the mixing section,
wherein, $30° \leq \alpha \leq 150°$.

3. An injection molding machine screw rotatably provided in a heating cylinder of an injection molding machine, the injection molding machine screw comprising:

a compression section configured to melt, mix, and compress a molten material consisting of a thermoplastic resin and reinforcing fibers while conveying the material forward from a rear end; and
a mixing section configured to stir, mix, and disperse the molten material consisting of the thermoplastic resin and the reinforcing fibers, wherein
the compression section and the mixing section located downstream of the compression section each are configured of a helical flight,
the helical flight of the compression section is formed of one continuous helical screw flight having a gradually-decreasing pitch along a material conveyance direction, and
the helical flight of the mixing section includes a plurality of grooves formed in a surface of the helical flight, the helical flight being not a continuous helical flight.

4. The injection molding machine screw according to claim 3, wherein the plurality of grooves formed in the flight of the mixing section are helically disposed crossing a helical direction of the flight with an angle of 30 to 150 degrees.

**5.** The injection molding machine screw according to claim 3 or 4, wherein a ratio of a helical pitch Pa in which the plurality of grooves are disposed and a pitch Pb of the flight in the mixing section is set to $1Pb \leq Pa \leq 3Pb$, in a case that the helical pitch Pb of the flight is 1.

**6.** The injection molding machine screw according to claim 3 or 4, wherein a ratio of a helical pitch Pb in which the plurality of grooves are disposed and a screw diameter D is set to $1D \leq Pb \leq 2D$, in a case that the screw diameter D is 1.

Fig.1

Fig.2

EP 3 385 053 A1

Fig.3

13

Fig.4

Fig.5

Fig.6

Fig.7

Fig.8

# EP 3 385 053 A1

<table>
<tr><td colspan="2" align="center"><b>INTERNATIONAL SEARCH REPORT</b></td><td>International application No.<br>PCT/JP2016/085456</td></tr>
</table>

**A. CLASSIFICATION OF SUBJECT MATTER**
*B29C45/50(2006.01)i, B29C45/60(2006.01)i*

According to International Patent Classification (IPC) or to both national classification and IPC

**B. FIELDS SEARCHED**

Minimum documentation searched (classification system followed by classification symbols)
B29C45/50, B29C45/60

Documentation searched other than minimum documentation to the extent that such documents are included in the fields searched
| | | | |
|---|---|---|---|
| Jitsuyo Shinan Koho | 1922–1996 | Jitsuyo Shinan Toroku Koho | 1996–2017 |
| Kokai Jitsuyo Shinan Koho | 1971–2017 | Toroku Jitsuyo Shinan Koho | 1994–2017 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 11-34131 A (Kawasaki Steel Corp.),<br>09 February 1999 (09.02.1999),<br>paragraphs [0031] to [0073]; fig. 1 to 5<br>& US 6228308 B1<br>column 5, line 65 to column 18, line 59; fig. 1<br>to 5<br>& WO 1998/052736 A1     & EP 920971 A1<br>& CA 2261584 C | 1-6 |
| Y | JP 2009-173012 A (LS Mtron Ltd.),<br>06 August 2009 (06.08.2009),<br>paragraphs [0027] to [0048]<br>& KR 10-2009-0082580 A   & CN 101497230 A | 1-6 |

☒ Further documents are listed in the continuation of Box C.          ☐ See patent family annex.

| | |
|---|---|
| * Special categories of cited documents:<br>"A"  document defining the general state of the art which is not considered   to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search<br>06 January 2017 (06.01.17) | Date of mailing of the international search report<br>24 January 2017 (24.01.17) |
|---|---|
| Name and mailing address of the ISA/<br>Japan Patent Office<br>3-4-3,Kasumigaseki,Chiyoda-ku,<br>Tokyo 100-8915,Japan | Authorized officer<br><br>Telephone No. |

Form PCT/ISA/210 (second sheet) (January 2015)

**17**

**EP 3 385 053 A1**

**INTERNATIONAL SEARCH REPORT**

International application No.

PCT/JP2016/085456

C (Continuation). DOCUMENTS CONSIDERED TO BE RELEVANT

| Category* | Citation of document, with indication, where appropriate, of the relevant passages | Relevant to claim No. |
|---|---|---|
| A | JP 2012-131042 A (Toyo Machinery & Metal Co., Ltd.), 12 July 2012 (12.07.2012), paragraphs [0015] to [0038]; fig. 1 to 4 (Family: none) | 1-6 |
| A | JP 8-336886 A (Sekisui Chemical Co., Ltd.), 24 December 1996 (24.12.1996), paragraphs [0010] to [0048]; fig. 1 to 8 (Family: none) | 1-6 |

Form PCT/ISA/210 (continuation of second sheet) (January 2015)

18

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012131042 A